# EUROPEAN PATENT APPLICATION

(11) **EP 4 667 915 A1**
(43) Date of publication of application: **24.12.2025**
(21) Application number: 24756615.1
(22) Date of filing: 26.01.2024
(51) Int. Cl.: G01N 21/88, G06T 7/00

(54) **APPEARANCE INSPECTION DEVICE AND APPEARANCE INSPECTION METHOD**

(30) Priority: 16.02.2023 JP 2023022389
(71) Applicant: Astemo, Ltd., Chiyoda-ku, Tokyo 1000004 (JP)
(72) Inventor: KOBAYASHI, Yoshihiko, Hitachinaka-shi, Ibaraki 312-8503 (JP); NITO, Takumi, Hitachinaka-shi, Ibaraki 312-8503 (JP); WATANABE, Takashi, Hitachinaka-shi, Ibaraki 312-8503 (JP); ICHINOSE, Masatoshi, Hitachinaka-shi, Ibaraki 312-8503 (JP)
(74) Representative: Hoffmann Eitle
(86) International application number: PCT/JP2024/002379
(87) International publication number: WO 2024/171764

(57) **Abstract**

A visual inspection apparatus inspects a surface of a piston based on a captured image of the surface of the piston and a learning result of machine learning conducted using a plurality of defective product sample images. The plurality of defective product sample images is each generated by combining a defect element image generated by overlapping a plurality of predetermined shapes with a surface image of a sample product equivalent to the piston.

## Description

### TECHNICAL FIELD

The present invention relates to a visual inspection apparatus and a visual inspection method.

### BACKGROUND ART

PTL 1 discloses a technique for inspecting a surface of an inspection target based on a captured image of the surface of the inspection target and a learning result of machine learning conducted using a plurality of defective product sample images.

### CITATION LIST

### PATENT LITERATURE

PTL 1: Japanese Patent Application Laid-Open No. 2022-135248

### SUMMARY OF INVENTION

### TECHNICAL PROBLEM

The above-described conventional visual inspection apparatus necessitates a large number of defective product sample images to construct a machine learning model, but a defective product emerges less frequently and therefore a collection process may become enormous.

One of objects of the present invention is to provide a visual inspection apparatus and a visual inspection method capable of reducing man-hours for collecting defective product samples.

### SOLUTION TO PROBLEM

A visual inspection apparatus according to one aspect of the present invention inspects a surface of an inspection target based on a captured image of the surface of the inspection target and a learning result of machine learning conducted using a plurality of artificial defect images. The plurality of artificial defect images is each generated by combining a defect element image generated by overlapping a plurality of predetermined shapes with a surface image of a sample product equivalent to the inspection target.

According to the one aspect of the present invention, the defective product samples do not have to be collected, and therefore the configuration for collecting the defective product samples can be reduced.

### BRIEF DESCRIPTION OF DRAWINGS

Fig. 1 schematically illustrates a visual inspection apparatus 1 according to a first embodiment.
Figs. 2(a) and 2(b) illustrate examples of an initial shape E₁ and a final shape E₂ of an ellipse, respectively.
Fig. 3 illustrates one example of an overall concept of generation of a defect element for a blowhole using the ellipse illustrated in Fig. 2.
Fig. 4 illustrates one example of a batch image of the defect element for a blowhole.
Fig. 5 illustrates another example of an overall concept of generation of defect elements for a cavity and a scratch using the ellipse illustrated in Fig. 2.
Figs. 6(a) and 6(b) illustrate examples of patch images of the defect element for a cavity and the defect element for a scratch, respectively.
Figs. 7(a) and 7(b) illustrate other examples of the initial shape E₁ and the final shape E₂ of the ellipse, respectively.
Fig. 8 illustrates one example of an overall concept of generation of a defect element for a cavity using the ellipse illustrated in Fig. 7.
Fig. 9 illustrates another example of the patch image of the defect element for a cavity.
Figs. 10(a) and 10(b) illustrate methods for generating an artificial defect image and a patch image of an artificial defect.
Fig. 11 is a flowchart illustrating a procedure for optimizing the defect element using a statistical analysis.
Fig. 12 illustrates the relationship between a major diameter and a luminance of a captured image of an actual defect.
Fig. 13 illustrates one example of a defect element generated in such a manner that the luminance reduces as the size of the defect increases.
Fig. 14 is a flowchart illustrating a procedure for optimizing the defect element using an optimization technique.

### DESCRIPTION OF EMBODIMENTS

### [First Embodiment]

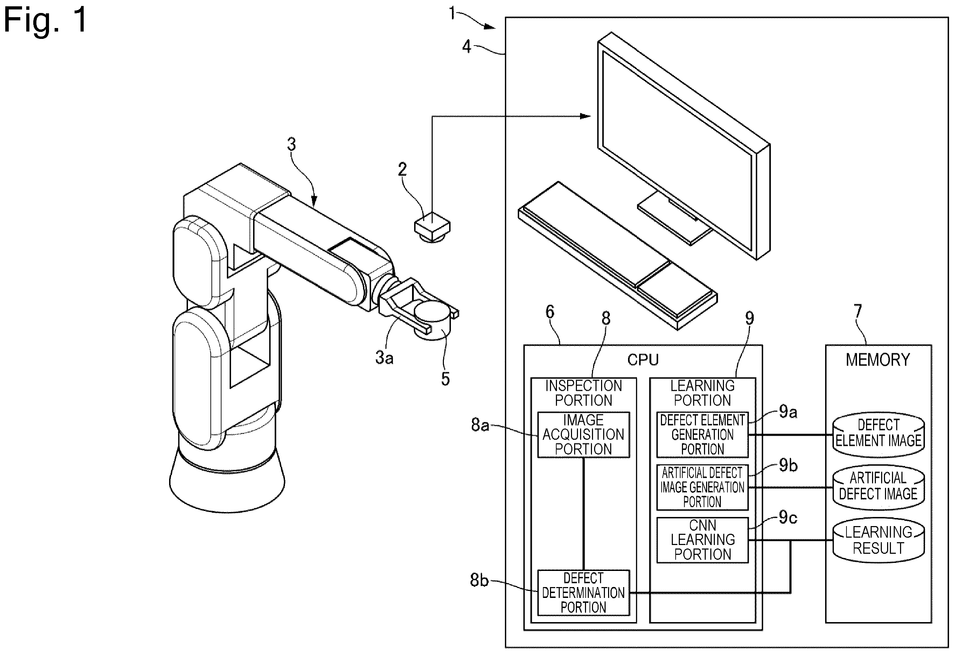

Fig. 1 schematically illustrates a visual inspection apparatus 1 according to a first embodiment.

The visual inspection apparatus 1 according to the first embodiment includes a camera (an imaging portion) 2, a robot 3, and a computer 4. The camera 2 images a surface of an engine piston material or a processed finished product of an engine piston (hereinafter simply referred to as a piston) 5, which is an inspection target. The robot 3 is an articulated robot, and includes a hand 3a that holds the piston 5.

The computer 4 is, for example, a personal computer, and includes a CPU 6 and a memory (a storage portion) 7. The CPU 6 includes an inspection portion 8 and a learning portion 9. The inspection portion 8 includes an acquisition portion 8a and a defect determination portion 8b. The acquisition portion 8a acquires a captured image captured by the camera 2. The defect determination portion 8b inspects whether a scratch or a defect is present on the surface of the piston 5 (classifies a product having a scratch or a defect as a defective product and a product not having them as an acceptable product) based on the captured image acquired by the acquisition portion 8a and a learning result stored in the memory 7.

The learning portion 9 includes a defect element generation portion 9a, an artificial defect image generation portion 9b, and a CNN learning portion 9c. The defect element generation portion 9a generates a defect element image by overlapping a plurality of predetermined shapes (a first image generation step). The artificial defect image generation portion 9b generates an artificial defect image, which is a pseudo defective product sample image, by combining the defect element image with a surface image of a sample product equivalent to the piston 5 (a second image generation step). The CNN learning portion 9c conducts machine learning using a plurality of artificial defect images. The machine learning is learning using a neural network, and deep learning based on a CNN (Convolutional Neural Network) model is employed in the first embodiment.

The memory 7 stores a plurality of defect element images generated by the defect element generation portion 9a, a plurality of artificial defect images generated by the artificial defect image generation portion 9b, and a learning result yielded by the CNN learning portion 9c.

Next, a method for generating the defect element image by the defect element generation portion 9a will be described.

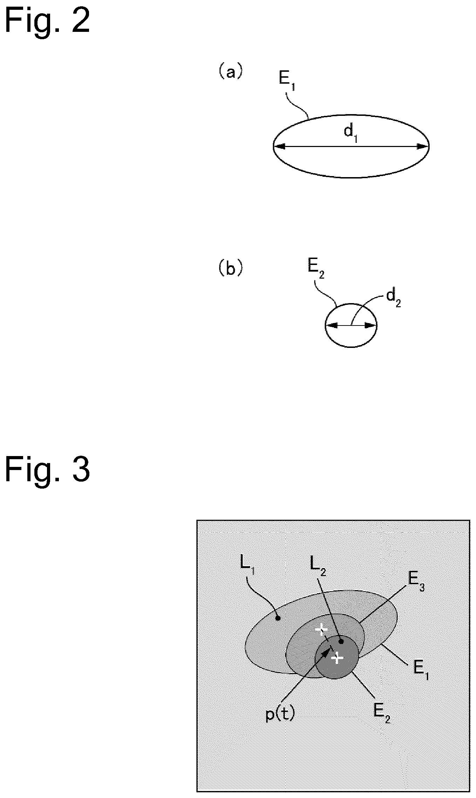

The defect element generation portion 9a generates the defect element image by overlapping a plurality of base graphics different in size and luminance (a second parameter) from each other. In the first embodiment, an ellipse is used as the base graphic, and the defect element image is generated by changing an input parameter. Figs. 2 (a) and 2(b) illustrate examples of an initial shape E₁ and a final shape E₂ of the ellipse, respectively. The initial shape E₁ illustrated in Fig. 2(a) has a major diameter d₁ and an aspect ratio a₁. On the other hand, the final shape E₂ illustrated in Fig. 2(b) has a major diameter d₂ and an aspect ratio a₂.

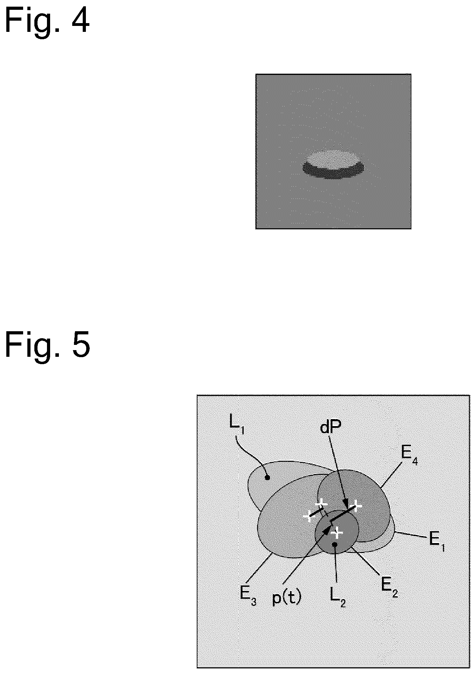

The defect element is generated by creating one or more intermediate shape(s) complementing an intermediate between the initial shape E₁ and the final shape E₂ and overlapping these shapes. Fig. 3 illustrates one example of an overall concept of generation of a defect element for a blowhole using the ellipse illustrated in Figs. 2(a) and 2(b), and the input parameter includes a major diameter (a first parameter) d, a luminance (the second parameter) L, a drawing path (a third parameter) p(t), a rotational angle θ, and the number of ellipses n. The drawing path p(t) is mathematically formulated by a straight line, and the number of ellipses is n = 3. As a result, a patch image of the defect element for a blowhole like an example illustrated in Fig. 4 can be generated.

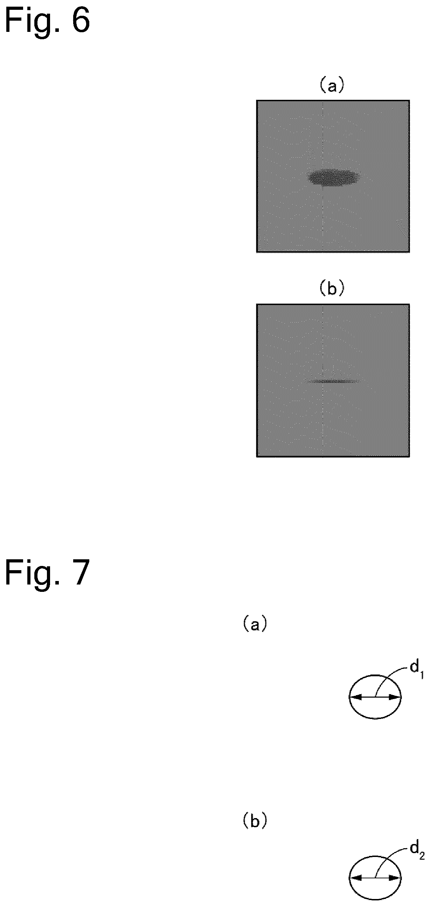

Fig. 5 illustrates an overall concept of defect images for a cavity and a scratch using the ellipse illustrated in Fig. 2, and the input parameter includes the major diameter d, the luminance L, the drawing path p(t), a random rotational angle dθ, a random coordinate shift amount dP, and the number of ellipses n. The drawing path p(t) is mathematically formulated by a straight line, and the number of ellipses is n = 4. A patch image of each of the defect element for a cavity like an example illustrated in Fig. 6(a) and the defect element for a scratch like an example illustrated in Fig. 6(b) can be generated by rotating/translating the base graphic randomly.

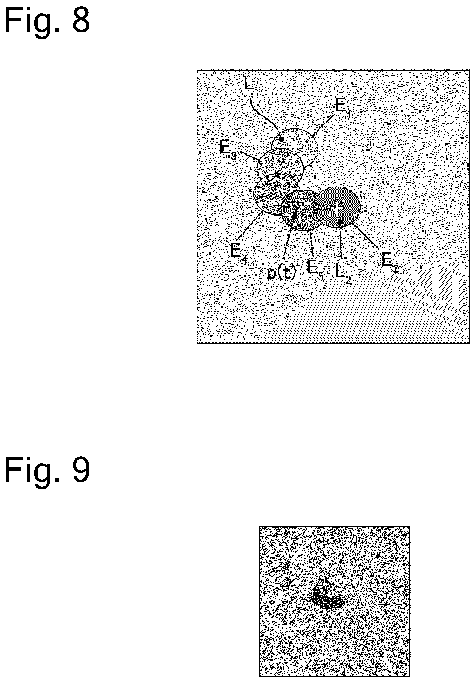

Figs. 7(a) and 7(b) illustrate other examples of the initial shape E₁ and the final shape E₂ of the ellipse, and the major diameter d₁ and the aspect ratio a₁ of the initial shape E₁ in Fig. 7(a) and the major diameter d₂ and the aspect ratio a₂ of the final shape E₂ in Fig. 7(b) are approximately equal to each other in this example. Fig. 8 illustrates an overall concept of the defect image for a cavity using the ellipse illustrated in Figs. 7(a) and 7(b), and the input parameter includes the major diameter d, the luminance L, the drawing path p(t), and the number of ellipses n. The drawing path p(t) is mathematically formulated by a curve such as a quadratic function or a Bezier curve, and the number of ellipses is n = 5. As a result, a patch image of the defect element for a cavity like an example illustrated in Fig. 9 can be generated.

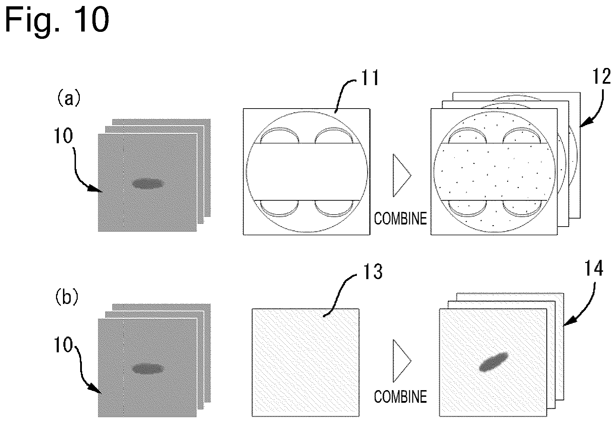

Figs. 10(a) and 10(b) illustrate a method for generating the artificial defect image by the artificial defect image generation portion 9b. Fig. 10(a) illustrates a method for generating the artificial defect image and Fig. 10(b) illustrates a method for generating a patch image of an artificial defect.

As illustrated in Fig. 10(a), a plurality of artificial defect images 12 can be generated by combining a plurality of defect element patch images 10 with a view 11 of the whole piston 5 as a background image, respectively. On the other hand, as illustrated in Fig. 10(b), a plurality of artificial defect patch images 14 can be generated by combining the plurality of defect element patch images 10 with a patch image 13 of the piston 5 as a background image, respectively.

Next, optimization of the defect element will be described.

The CNN learning portion 9c causes a neural network to learn images of defects using the plurality of artificial defect images and the plurality of artificial defect patch images generated by the artificial defect image generation portion 9b. At this time, learning an artificial defect image having a visual feature different from an actual defect results in a reduction in the accuracy of the CNN, and therefore this learning requires a defect element capable of improving the recognition accuracy of the CNN, i.e., a defect element resembling an actual defect and not resembling an acceptable product. In other words, the defect element (the parameters for generating it) should be optimized to improve the accuracy of the CNN. In the following description, two methods for optimizing the defect element will be described.

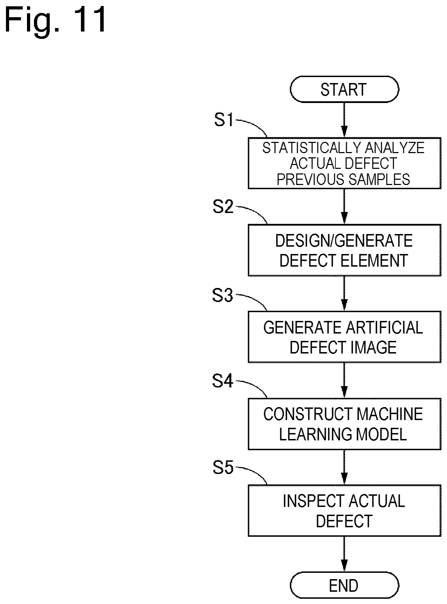

The first method is a method for generating a defect element similar to an actual defect by generating the defect element based on statistical information of the actual defect. Fig. 11 is a flowchart illustrating a procedure for optimizing the defect element using a statistical analysis.

In step S1, previous samples of actual defects are statistically analyzed for each defect type (a cavity and a scratch). More specifically, for example, the relationship between the major diameter and the luminance is extracted.

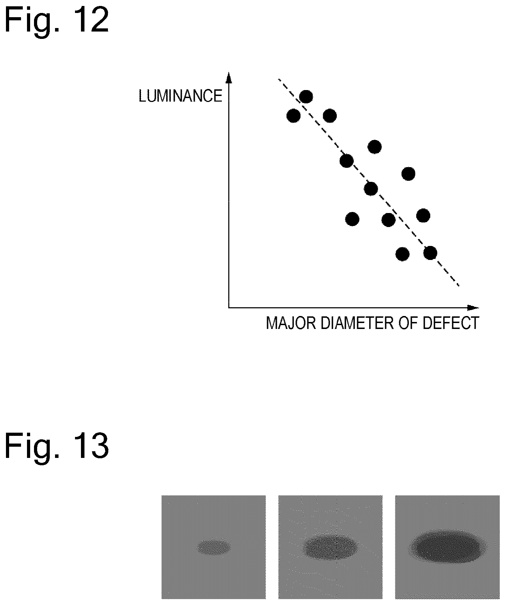

In step S2, the defect element is designed/generated for each defect type based on the result of the statistical analysis in step S1. For example, if the statistical analysis reveals such a relationship that the luminance reduces as the size of the defect increases as illustrated in Fig. 12, the defect element is generated while the parameters are set so that the luminance reduces (is darkened) as the size of the defect increases as illustrated in Fig. 13.

In step S3, the artificial defect image is generated from the defect element generated in step S2.

In step S4, a machine learning model (a CNN model) is constructed by labeling the artificial defect image generated in step S3 for each defect type.

In step S5, an actual defect is inspected based on a result of learning of the CNN model generated in step S4.

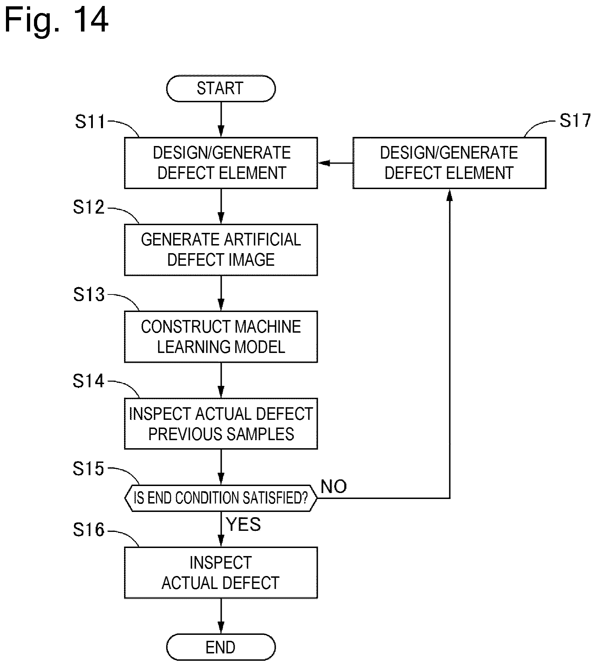

The second method is a method for optimizing design variables of the defect element using an optimization technique or the like. Fig. 14 is a flowchart illustrating a procedure for optimizing the defect element using an optimization method.

In step S11, the parameters (the major diameter d, the luminance L, the drawing path p(t), the rotational angle θ, and the number of ellipses n) of the defect element are designed for each defect type, and the defect element is generated using the tentative parameters.

In step S12, the artificial defect image is generated from the defect element generated in step S11.

In step S13, a machine learning model (a CNN model) is constructed by labeling the artificial defect image generated in step S12 for each defect type.

In step S14, actual defect previous samples are inspected.

In step S15, whether an end condition is satisfied is determined. If the determination in step S15 is YES, the processing proceeds to step S16. If the determination in step S15 is NO, the processing proceeds to step S17. In this case, whether an objective function (an accuracy score of defective products and acceptable products) is equal to or higher than a threshold value is determined as the end condition.

In step S16, an actual defect inspection is conducted.

In step S17, the parameters are corrected so as to maximize the objective function.

Next, advantageous effects of the first embodiment will be described.

Conventional visual inspection methods cause a CNN to learn images of defects using collected defective product sample images and determine whether a defect is present in an image of an inspection target. Therefore, manufacturing lines operating at a low defect rate require man-hours and time to collect the defective product samples required for the learning.

On the other hand, the visual inspection method according to the first embodiment inspects the surface of the piston 5 based on the captured image of the surface of the piston 5 and the learning result of the machine learning conducted using the plurality of artificial defect images each generated by combining the defect element image generated by overlapping the plurality of predetermined shapes with the surface image of the sample product equivalent to the piston 5.

In other words, using the artificial defect images eliminates the necessity of collecting and storing the defective product sample images. The time required to generate the artificial defect images is short compared with the time required to collect the defective product samples, and therefore the actual work time can be curtailed and the inspection efficiency can be improved. This effect is remarkable especially for a manufacturing line expected to take time to collect the defective product samples, such as a manufacturing line operating at a low defect rate and a manufacturing line used to manufacture multiple products.

Further, the visual inspection method according to the first embodiment generates the defect element image by overlapping the plurality of predetermined shapes, thereby being able to further easily generate the artificial defect image compared with a method that generates the defect element image using a 3D model.

The defect element image according to the first embodiment is generated by overlapping the plurality of shapes different in at least one of size or luminance from each other. A defect element image further close to an actual defect can be generated by overlapping the plurality of shapes while changing the shape or luminance parameter. Conventional methods for generating the defect element image using a single graphic can express only a specific shape such as an ellipse or a circle and a simple change in the luminance. On the other hand, the visual inspection method according to the first embodiment can generate defects having various shapes or appearances by changing the shape and the luminance to overlap, thereby generating an artificial defect image further matching an actual defect. Especially, a further complicated artificial defect image can be easily generated by preparing the plurality of parameters and changing them. Further, a defect variation desired to be detected can be parametrically managed/optimized.

Further, the overlapped base graphic is set to the ellipse for the defect element image. A wide variety of defect shapes such as a circular or an elliptic cavity or a linear scratch can be expressed by changing the dimensional parameters such as the major diameter, the minor diameter, and the rotational angle of each ellipse. Further, a shape having a rounded corner, as is the case with an actual defect, can be easily expressed. For example, a curved linear defect can be expressed by reducing the dimension of the ellipse to the utmost.

The defect element image is generated by overlapping the initial shape, the final shape, and one or more intermediate shape(s). If the defect element image is ever generated by overlapping only the initial shape and the final shape, this leads to a sharp change in the dimension and the luminance, thereby making it difficult to generate an artificial defect image close to an actual defect. In light thereof, providing the intermediate shape between the initial shape and the final shape contributes to suppressing a sudden change in the dimension and the luminance, thereby generating an artificial defect image further close to an actual defect.

The defect element image has the drawing path connecting the initial shape and the final shape as the parameter, and the intermediate shape is generated at a position according to the drawing path. As a result, a further complicated artificial defect image like an arcuate defect can be generated.

The parameters of the defect element image are set based on the statistical data acquired from previous samples of actual defects. Various artificial defect elements can be generated with shapes further close to actual defects by generating the defect element based on the statistical information of actual defects.

### [Other Embodiments]

Having described the embodiment for implementing the present invention, the specific configuration of the present invention is not limited to the configuration of the embodiment, and the present invention also includes a design modification and the like thereof made within a range that does not depart from the spirit of the present invention, if any.

For example, the base graphic overlapped when the defect element image is generated may be a circle or a polygon without being limited to the ellipse.

The inspection target is not limited to the piston.

The learning result may be any machine learning without being limited to a neural network and deep learning.

The present invention shall not be limited to the above-described embodiment, and includes various modifications. For example, the above-described embodiment has been described in detail to facilitate a better understanding of the present invention, and the present invention shall not necessarily be limited to the configuration including all of the described features. Further, a part of the configuration of some embodiment can be replaced with the configuration of another embodiment. Further, some embodiment can also be implemented with a configuration of another embodiment added to the configuration of this embodiment. Further, each embodiment can also be implemented with another configuration added, deleted, or replaced with respect to a part of the configuration of this embodiment.

The present application claims priority under the Paris Convention to Japanese Patent Application No. 2023-022389 filed on February 16, 2023. The entire disclosure of Japanese Patent Application No. 2023-022389 filed on February 16, 2023 including the specification, the claims, the drawings, and the abstract is incorporated herein by reference in its entirety.

### REFERENCE SIGNS LIST

- 1: visual inspection apparatus
- 2: camera (imaging portion)
- 5: piston (inspection target)
- 7: memory (storage portion)
- 8: inspection portion

## Claims

1. A visual inspection apparatus configured to inspect a surface of an inspection target, the visual inspection apparatus comprising:
an imaging portion configured to image a surface of the inspection target;
a storage portion configured to store a learning result of machine learning conducted using a plurality of artificial defect images, the plurality of artificial defect images being each generated by combining a defect element image generated by overlapping a plurality of predetermined shapes with a surface image of a sample product equivalent to the inspection target; and
an inspection portion configured to inspect the surface of the inspection target based on a captured image captured by the imaging portion and the learning result.

2. The visual inspection apparatus according to claim 1, wherein each of the plurality of predetermined shapes has a feature amount of the predetermined shape as a first parameter, and
wherein the defect element image is generated by overlapping the plurality of predetermined shapes different in the first parameter from each other.

3. The visual inspection apparatus according to claim 2, wherein the first parameter is a dimension or a luminance of the predetermined shape.

4. The visual inspection apparatus according to claim 2, wherein the predetermined shape is an ellipse, and the first parameter is at least one of a major diameter or a minor diameter of the ellipse.

5. The visual inspection apparatus according to claim 2, wherein each of the plurality of predetermined shapes has a feature amount different from the first parameter as a second parameter, and
wherein the defect element image is generated by overlapping the plurality of predetermined shapes different in the first parameter and the second parameter from each other.

6. The visual inspection apparatus according to claim 5, wherein the first parameter is a dimension of the predetermined shape, and
wherein the second parameter is a luminance of the predetermined shape.

7. The visual inspection apparatus according to claim 5, wherein the predetermined shape is an ellipse,
wherein the first parameter is at least one of a major diameter or a minor diameter of the ellipse, and
wherein the second parameter is a luminance of the predetermined shape.

8. The visual inspection apparatus according to claim 2, wherein the plurality of predetermined shapes includes
an initial shape and a final shape, and
an intermediate shape created by changing the first parameter from the initial shape or the final shape, the intermediate shape complementing an intermediate between the initial shape and the final shape, and
wherein the defect element image is generated by overlapping the initial shape, the final shape, and the intermediate shape.

9. The visual inspection apparatus according to claim 8, wherein a path connecting the initial shape and the final shape can be specified as a third parameter, and the intermediate shape is formed at a position corresponding to the third parameter.

10. The visual inspection apparatus according to claim 5, wherein the first parameter and the second parameter are set based on statistical data acquired from a sample of an actual defect.

11. An image generation method for generating an artificial defect image used to inspect a surface of an inspection target, the image generation method comprising:
a first image generation step of generating a defect element image by overlapping a plurality of predetermined shapes; and
a second image generation step of generating each of a plurality of artificial defect images by combining the defect element image with a surface image of a sample product equivalent to the inspection target.
